# EUROPÄISCHE PATENTSCHRIFT

(11) **EP 2 805 785 B1**
(45) Veröffentlichungstag und Bekanntmachung des Hinweises auf die Patenterteilung: **11.01.2017**
(21) Anmeldenummer: 13168899.6
(22) Anmeldetag: 23.05.2013
(51) Int. Cl.: B23B 31/02, B23B 31/08, B23B 27/08

(54) **Werkzeughalter für Werkzeugmaschinen**
Tool holder for machine tools
Porte-outil pour machines-outils

(43) Veröffentlichungstag der Anmeldung: 26.11.2014
(73) Patentinhaber: Wissing, Johannes, 48703 Stadtlohn (DE)
(72) Erfinder: Wellach, Adolf, 48712 Gescher (DE)
(74) Vertreter: Zenz Patentanwälte Partnerschaft mbB

(56) Entgegenhaltungen:
- DE-A1- 3 336 735
- DE-C1- 4 127 325
- DE-C2- 4 019 671
- US-A- 2 468 396
- US-A- 2 475 386

## Beschreibung

Die vorliegende Erfindung betrifft einen Werkzeughalter für Werkzeugmaschinen mit einem maschinenseitigen Halterteil und einem werkzeugseitigen Halterteil, und insbesondere einen Werkzeughalter für Werkzeugmaschinen mit einem einstellbaren Winkelausgleich für das werkzeugseitige Halterteil des Werkzeughalters.

Ein Werkzeughalter für Werkzeugmaschinen mit einem Winkelausgleich ist beispielsweise aus der DE 40 19 671 C2 bekannt. Bei dem aus der vorgenannten Druckschrift bekannten Werkzeughalter ist ein Radialausgleich zwischen dem maschinenseitigen Halterteil und dem werkzeugseitigen Halterteil möglich, und zwar aufgrund der Verwendung einer speziellen Kupplungseinrichtung (Oldham-Kupplung). Ferner ermöglicht der bekannte Werkzeughalter einen Winkelausgleich des werkzeugseitigen Halterteils (der notwendig ist, wenn die zu bearbeitende Bohrung gegenüber dem Werkzeug in dem Werkzeughalter winkelversetzt ist). Die Möglichkeit des Winkelausgleichs bedingt aufgrund des Eigengewichtes des werkzeugseitigen Halterteils (und des Werkzeugs) jedoch, dass dieses in dem Werkzeughalter im Ruhezustand selber verkippt ist, d. h. die Drehachse des maschinenseitigen Werkzeugteils nicht parallel zu der Drehachse des maschinenseitigen Werkzeugteils ist.

Bedingt durch die Funktion und den Aufbau des Werkzeughalters gemäß der DE 40 19 671 C2 muss beim Anschneiden des Werkzeugs beim Bohrungsbeginn eine sehr geringe Schnittgeschwindigkeit von maximal 15m/min gewählt werden. Nach den ersten Millimetern kann dann, in Abhängigkeit von dem zu bearbeitenden Material, die Schnittgeschwindigkeit auf bis zu 80m/min erhöht werden.

Es ist daher Aufgabe der vorliegenden Erfindung, einen Werkzeughalter für Werkzeugmaschinen bereitzustellen, bei welchem der Winkelausgleich gewährleistet ist, gleichzeitig aber eine Verkippung des werkzeugseitigen Halterteils im unbelasteten Zustand vermieden wird.

Die Aufgabe wird erfindungsgemäß gelöst durch einen Werkzeughalter für Werkzeugmaschinen mit einem maschinenseitigen Halterteil und einem werkzeugseitigen Halterteil sowie einer die Halterteile mit radialem Spiel drehfest miteinander verbindenden Kupplungseinrichtung, die sich maschinenseitig an einer Winkelscheibe abstützt, welche über einen balligen Bereich winkelverstellbar an dem maschinenseitigen Halterteil angeordnet ist, und die ein radial bewegbares Kupplungselement mit zumindest zwei Ausnehmungen umfasst, wobei in eine Ausnehmung ein Mitnehmer des werkzeugseitigen Halterteils und in die andere Ausnehmung ein Mitnehmer des maschinenseitigen Halterteils eingreift. Der zumindest eine Mitnehmer des maschinenseitigen Halterteils erstrecken sich ferner durch die Winkelscheibe, so dass die Drehkräfte von einem Halterteil auf die Kupplungseinrichtung und von dieser auf den anderen Halterteil übertragen werden. Die Winkelscheibe selber wird von Drehkräften freigehalten und dient lediglich der Abstützung der Kupplungseinrichtung an dem maschinenseitigen Halterteil.

Der Werkzeughalter umfasst ferner eine das werkzeugseitige Halterteil gegen das maschinenseitige Halterteil verspannende, das werkzeugseitige Halterteil teilweisende umgebende Vorspanneinrichtung, wobei die Vorspanneinrichtung einen Wälzring mit einer Mehrzahl von Wälzkörpern umfasst. Der Wälzring ermöglicht eine radiale Bewegung des werkzeugseitigen Halterteils zu der Vorspanneinrichtung sowie eine den Winkelausgleich des werkzeugseitigen Halterteils.

Bei dem Werkzeughalter stützt sich das maschinenseitige Halterteil mit radialem Spiel demnach gegen zwei Flächen ab, und zwar zum einen gegen die Winkelscheibe und zum anderen gegen eine Anlagefläche der Vorspanneinrichtung. Das maschinenseitige Halterteil ist zum Winkelausgleich verkippbar, wobei die Winkelscheibe einen ersten Dreh- bzw. Schwenkpunkt bereitstellt, und der Wälzring mit den Wälzkörpern der Vorspanneinrichtung einen zweiten Drehpunkt bereitstellt. Die Winkelscheibe ist im zentralen Bereich zumindest teilweise ballig ausgebildet, damit eine Drehung der Winkelscheibe gegenüber dem maschinenseitigen Halterteil möglich ist, wobei das maschinenseitige Halterteil zur Aufnahme eines Abschnittes der Winkelscheibe eine zentrale konische Ausnehmung aufweist.

Der Werkzeughalter ist erfindungsgemäß dadurch gekennzeichnet, dass sowohl die Kupplungseinrichtung als auch die Vorspanneinrichtung jeweils ein elastisches Kunststoffelement umfasst, wobei die Shore-A-Härte des elastischen Kunststoffelementes der Vorspanneinrichtung größer als die Shore-A-Härte des elastischen Kunststoffelementes der Kupplungseinrichtung ist.

Mit der Vorspanneinrichtung wird das werkzeugseitige Halterteil gegenüber dem maschinenseitigen Halterteil verspannt, wobei das werkzeugseitige Halterteil über die Bauteile der Vorspanneinrichtung, der Kupplungseinrichtung sowie die Winkelscheibe gegen das maschinenseitige Halterteil gedrückt wird.

Die Vorspanneinrichtung selber kann beispielsweise an einem Gewinde einer die Vorspanneinrichtung sowie das werkzeugseitige Halterteil umgebenden Hülse mittels eines Vorspannringes axial verstellbar festgelegt sein, wobei die Hülse Teil des maschinenseitigen Halterteils sein kann (und dann einstückig mit diesem ausgebildet ist) oder zur Vereinfachung der Herstellung des maschinenseitigen Halterteils an diesem befestigt ist.

In Abhängigkeit von der über die Vorspanneinrichtung auf das werkzeugseitige Halterteil übertragenen Kraft bewegt sich das Halterteil aus der Verkippung in einen achsparallelen Zustand, und zwar bedingt durch eine Zentrierung der Winkelscheibe in der konischen Ausnehmung, wobei sich die Drehachse des werkzeugseitigen Halterteils mit zunehmender Kraft der Drehachse des maschinenseitigen Halterteils angleicht, bis diese schließlich parallel sind (aufgrund des radialen Spiels fluchten die Achsen jedoch nicht unbedingt). In diesem Zustand fluchtet die Drehachse der Winkelscheibe mit der Drehachse des maschinenseitigen Halterteils und ist parallel zu der Drehachse des werkzeugseitigen Halterteils.

Durch die Verwendung der beiden elastischen Kunststoffelemente können Fehler in dem Gewinde der Hülse ausgeglichen werden. Da die Shore-A-Härte des elastischen Kunststoffelementes der Vorspanneinrichtung größer als die Shore-A-Härte des elastischen Kunststoffelementes der Kupplungseinrichtung ist wird sichergestellt, dass ein Radialausgleich im Bereich der Kupplungseinrichtung weiterhin gewährleistet ist, da die Elastizität des Kunststoffelementes der Kupplungseinrichtung größer ist und somit die Reibung zwischen der Winkelscheibe und der Kupplungseinrichtung zum einen und in der Kupplungseinrichtung selber vermindert ist. Die Verwendung der elastischen Kunststoffelemente unterschiedlicher Shore-A-Härte gewährleistet also, dass ein Winkelausgleich möglich ist, im unbelasteten Zustand des Werkzeughalters das werkzeugseitige Halterteil (samt Werkzeug) bei entsprechender Einstellung der Vorspanneinrichtung aber nicht verkippt ist. Ferner ist auch in dem vorgespannten Zustand (in dem die Verkippung durch die Vorspanneinrichtung vermieden ist) ein Radialspiel zwischen den Halterteilen möglich.

Die elastischen Kunststoffelemente gewährleisten, dass die wirkenden Kräfte präzise eingestellt werden können und so ein optimaler Abgleich zu den auftretenden Kräften möglich ist. Die elastischen Kunststoffelemente bewirken ferner, dass sich der Werkzeughalter im Betrieb nicht verstellt, da die auftretenden Vibrationen abgedämpft werden und nicht ungedämpft an die Vorspanneinrichtung übertragen werden.

Die elastischen Kunststoffelemente sind vorzugsweise aus einem Polyurethan-Kautschuk gefertigt. Polyurethan-Kautschuk ist ein synthetisches Elastomer mit speziellen Eigenschaften und wesentlichen Vorteilen gegenüber den altbekannten Gummisorten: sehr lange Lebensdauer bei werkstoffgerechtem Einsatz; hohe Reißfestigkeit bzw. hoher Einreißwiderstand; sehr gute Beständigkeit gegenüber den in der spanlosen Fertigung gebräuchlichen Schmiermitteln; ausgezeichnete Elastizität; gute thermische Belastbarkeit. Beispielsweise können die elastischen Kunststoffelemente aus FIBROFLEX ® gefertigt sein. Alternativ können andere elastische Kunststoffe verwendet werden.

Mit dem erfindungsgemäßen Werkzeughalter sind auch bei dem Anschneiden eines Werkstückes hohe Schnittgeschwindigkeiten möglich. Ferner ist das Anschneideverhalten sehr ruhig, was eine verbesserte Oberflächengüte und Geometriewerte bedingt.

Üblicherweise wird der Werkzeughalter drehfest gehalten, während das zu bearbeitende Werkstück gedreht wird. Bei zu drehenden Werkzeughaltern (wenn also das Werkstück selber drehfest ist) ist es nicht gewünscht, dass der Werkzeughalter einen Winkelausgleich ermöglicht; der Radialausgleich hingegen soll weiterhin gewährleistet sein. Ein Abstellen des Winkelausgleichs ist jedoch mit dem Werkzeughalter wie zuvor beschrieben nicht möglich; wird über die Vorspanneinrichtung eine Kraft auf das werkzeugseitige Halterteil ausgeübt, die jeden Winkelausgleich unterbindet, ist auch ein Radialausgleich nicht mehr möglich, das werkzeugseitige Halterteil wäre ohne Ausgleichmöglichkeit an dem maschinenseitigen Halterteil fixiert, was jedoch unerwünscht ist.

Bei einer bevorzugten Ausführungsform umfasst die Kupplungseinrichtung ein zentrales, in bzw. an dem werkzeugseitigen Halterteil axial verstellbares Justiermodul, wobei das Justiermodul das elastische Kunststoffelement umfasst und sich maschinenseitig über einen inneren Wälzring mit einer Mehrzahl von Wälzkörpern an der Winkelscheibe abstützt. Die Kupplungseinrichtung weist bei dieser Ausführungsform zumindest einen äußeren Wälzring mit einer Mehrzahl von Wälzkörpern auf und stützt sich maschinenseitig an der Winkelscheibe ab.

Bei dieser bevorzugten Ausführungsform ist es möglich, den Winkelausgleich über das Justiermodul abzustellen, indem das Justiermodul in dem werkzeugseitigen Halterteil derart angezogen wird, dass die Gewichtskräfte des werkzeugseitigen Halterteils (und ggf. des zu drehenden Werkzeugs) und die bei dem Bearbeiten des Werkstücks auftretenden Kräfte nicht ausreichen, um eine Winkelverstellung über die Winkelscheibe zu bewirken, da die über das Justiermodul auf die Winkelscheibe aufgebrachten Kräfte zu groß sind. Um weiterhin einen radialen Versatz des werkzeugseitigen Halterteils zu gewährleisten, umfasst das Justiermodul den inneren, sich an der Winkelscheibe abstützenden Wälzring mit einer Mehrzahl an Wälzkörpern. Ferner umfasst die Kupplungseinrichtung einen äußeren Wälzring mit einer Mehrzahl von Wälzkörpern, um auch im äußeren Bereich der Kupplungseinrichtung einen leichtgängiges Radialspiel zu gewährleisten.

Das elastische Kunststoffelement ist bei dieser Ausführungsform in dem Justiermodul der Kupplungseinrichtung angeordnet, da nur bei einer solchen Anordnung des elastischen Kunststoffelements auch bei "abgestelltem" Winkelausgleich ein Radialspiel (in Kombination mit dem inneren und äußeren Wälzring) gewährleistet ist. Das elastische Kunststoffelement ist aber weiterhin notwendig, um im Zustand mit Winkelausgleich eine präzise und beständige Einstellung der Kräfte (und damit des Winkelausgleichs) zu ermöglichen.

Bei dieser bevorzugten Ausführungsform kann über die Einstellung des Justiermoduls (also die auf die Winkelscheibe aufgebrachte Kraft) der Winkelausgleich abgestellt und ermöglicht werden, und zwar in Abhängigkeit von dem Gewicht des werkzeugseitigen Halterteils, des Werkzeuges und der bei der Bearbeitung erwarteten Kräfte. Der Werkzeughalter kann also drehend und drehfest verwendet werden und ist damit sehr flexibel einsetzbar. Ferner ist es bei Einsatz des erfindungsgemäßen Werkzeughalters gemäß der hier beschriebenen Ausführungsform nicht weiter notwendig, für die drehende und stehende Bearbeitung unterschiedliche Werkzeughalter vorzuhalten.

Um eine einfache Einstellung des Justiermoduls zu ermöglichen, umfasst das Justiermodul ein über das werkzeugseitige Halterteil zugängliches Stellmittel. Zum Einstellen des Werkzeughalters wird zunächst ein dem maschinenseitigen Halterteil vom Gewicht her entsprechendes werkzeugseitiges Meisterstück eingesetzt und die auf die Winkelscheibe einwirkende Kraft so lange erhöht, bis die Drehachse der Winkelscheibe mit der Drehachse des maschinenseitigen Halterteils fluchtet (was über das Meisterstück gemessen wird); anschließend wird das Meisterstück durch ein werkzeugseitiges Halterteil ersetzt und ggf. die Vorspanneinrichtung zum Einstellen des Radialausgleich nachgestellt. Die Verwendung des Meisterstücks erleichtert die Vermessung bzw. Einstellung, kann aber bei Verwendung entsprechender Werkzeuge entfallen.

Um ein möglichst einfaches Radialspiel zu gewährleisten, ist es bei einer bevorzugten Ausführungsform vorgesehen, dass die Wälzkörper in dem zumindest einen äußeren Wälzring als Rollen ausgebildet sind.

Wie bereits oben ausgeführt, umfasst auch die Vorspanneinrichtung einen Wälzring mit einer Mehrzahl von Wälzkörpern, wobei der Wälzring bzw. die darin angeordneten Wälzkörper einen zweiten Drehpunkt für das werkzeugseitige Halterteil bereitstellen. Um ein Verkanten an der Vorspanneinrichtung zu vermeiden, ist es bei einer bevorzugten Ausführungsform vorgesehen, dass die Wälzkörper der Vorspanneinrichtung als Kugeln ausgebildet sind.

Bei einer bevorzugten Ausführungsform des erfindungsgemäßen Werkzeughalters beträgt die Shore-A-Härte des elastischen Kunststoffelements der Kupplungseinrichtung zwischen 50 und 70 und die Shore-A-Härte des elastischen Kunststoffelements der Vorspanneinrichtung zwischen 80 und 100, und bei einer besonders bevorzugten Ausführungsform ist die Shore-A-Härte des elastischen Kunststoffelements der Kupplungseinrichtung ca. 60 und die Shore-A-Härte des elastischen Kunststoffelements der Vorspanneinrichtung ca. 95.

Im nachfolgenden werden zwei Ausführungsformen des erfindungsgemäßen Werkzeughalters unter Bezugnahme auf die Zeichnung beschrieben, in welcher
Figur 1 eine Schnittansicht einer ersten Ausführungsform zeigt,
Figur 2 eine Schnittansicht einer zweiten Ausführungsform zeigt,
Figuren 3A und 3B eine Detailschnittansicht eines Abschnitts der Kupplungseinrichtung der zweiten Ausführungsform und eine Detailschnittansicht der Vorspanneinrichtung zeigt, und
Figur 4 eine Detailschnittansicht des Justiermoduls gemäß der zweiten Ausführungsform zeigt.

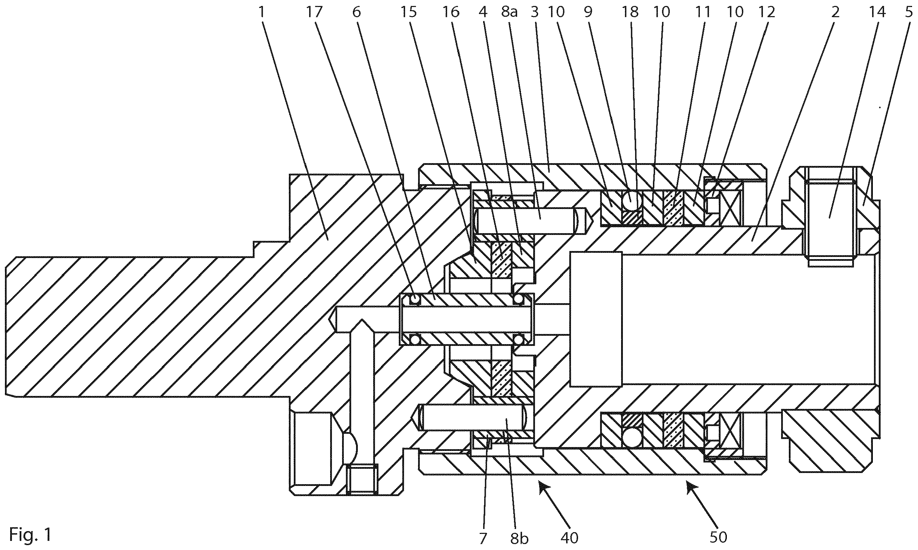

Figur 1 zeigt eine Schnittansicht einer ersten Ausführungsform des erfindungsgemäßen Werkzeughalters mit einem maschinenseitigen Halterteil 1, das drehfest in einer Werkzeugmaschine eingespannt werden kann. Der erfindungsgemäße Werkzeughalter umfasst ferner ein werkzeugseitiges Halterteil 2, in welchem das zur Bearbeitung des Werkstückes vorgesehene Werkzeug aufgenommen wird. Zwischen dem maschinenseitigen Halterteil 1 und dem werkzeugseitigen Halterteil 2 ist eine Kupplungseinrichtung 40 vorgesehen, welche die beiden Halterteile 1, 2 drehfest und mit radialem Spiel miteinander verbindet. Das werkzeugseitige Halterteil 2 und die Kupplungseinrichtung 40 sind von einer Hülse 3 aufgenommen, die fest mit dem maschinenseitigen Halterteil 1 verbunden ist. Bei anderen Ausführungsformen kann das maschinenseitige Halterteil 1 einstückig mit der Hülse 3 ausgebildet sein. Der maximale Außendurchmesser des werkzeugseitigen Halterteils 2 ist geringer als der Innendurchmesser der an dem maschinenseitigen Halterteil 1 befestigten Hülse 3, so dass eine radiale Verschiebung des werkzeugseitigen Halterteils 2 zu dem maschinenseitigen Halterteil 1 möglich ist, wobei diese Verschiebung bei der gezeigten Ausführungsform durch die Hülse 3 begrenzt ist.

Bei der gezeigten Ausführungsform umfasst die Kupplungseinrichtung 40 eine Kupplungsscheibe 4, die sich zu der Werkzeugseite an dem werkzeugseitigen Halterteil abstützt. Zu der Maschinenseite hin stützt sich die Kupplungsscheibe 4 an einem elastischen Kunststoffelement 16 mit einer Shore-A-Härte von ca. 60 ab. Bei der gezeigten Ausführungsform umfassen die Kupplungsscheibe 4 sowie das elastische Kunststoffelement 16 mehrere Öffnungen, in die zum einen Mitnehmer 8a des werkzeugseitigen Halterteils und zum anderen Mitnehmer 8b des maschinenseitigen Halterteils eingreifen. Bei der gezeigten Ausführungsform umfassen die beiden Halterteile jeweils zwei Mitnehmer, wobei die insgesamt vier Mitnehmer um 90° zueinander versetzt sind. Zur besseren Veranschaulichung der Kupplungseinrichtung ist in Figur 1 sowohl ein werkzeugseitiger Mitnehmer als auch maschinenseitiger Mitnehmer dargestellt, d. h. die Schnittansicht in Figur 1 ist im unteren Teil um 90° zu der Schnittansicht im oberen Teil versetzt.

Die Kupplungseinrichtung 40 stützt sich über das elastische Kunststoffelement 16 an einer Winkelscheibe 15 ab, die mit einem zumindest teilweise ballig ausgebildeten Abschnitt 15a in einer konischen Ausnehmung in dem maschinenseitigen Halterteil 1 gelagert ist.

Das werkzeugseitige Halterteil ist über einen Vorspannring 13 und eine Vorspanneinrichtung 50 in der Hülse 3 bzw. gegenüber dem maschinenseitigen Halterteil 1 verspannt bzw. axial verstellbar gelagert. In Abhängigkeit von der Einstelltiefe des Vorspannrings 12 erhöht sich die über die Vorspanneinrichtung 50 auf das werkzeugseitige Halterteil 1 übertragene Kraft. Ist beispielsweise der Vorspannring lediglich locker eingesetzt und hat das werkzeugseitige Halterteil 2 auch ein gewisses axiales Spiel innerhalb der Hülse 3 und gegenüber dem maschinenseitigen Halterteil 1, kann dieses an der Winkelscheibe (aufgrund der zumindest teilweise ballig ausgebildeten Fläche) in der Hülse verkippen. Wird die Gewindeschraube angezogen, sprich das werkzeugseitige Halterteil gegenüber dem maschinenseitigen Halterteil verspannt, bedingt die Ausbildung der Winkelscheibe sowie der entsprechenden Aufnahme in dem maschinenseitigen Halterteil 1, dass sich die Zentral- bzw. Drehachse der Winkelscheibe an der Zentral- bzw. Drehachse des maschinenseitigen Halterteils ausrichtet. Gleichzeitig ändert sich die Zentral- bzw. Drehachse des werkzeugseitigen Halterteils, wobei für den Fall, dass ein Radialausgleich stattfindet, schwerkraftbedingt die Zentral- bzw. Drehachse des werkzeugseitigen Halterteils nicht mit der Zentral- bzw. Drehachse des maschinenseitigen Halterteils fluchtet, sondern lediglich parallel zu dieser ausgerichtet wird.

Wenn das werkzeugseitige Halterteil durch eine entsprechende Einstellung der Vorspanneinrichtung 50 derart ausgerichtet ist, dass in dem unbelasteten Zustand (wenn also kein Werkstück bearbeitet wird) keine Verkippung erfolgt, kann diese Verkippung bzw. ein Winkelausgleich bei zusätzlich auftretenden Kräften jedoch erfolgen, wobei bei diesem Winkelausgleich ggf. eine Komprimierung eines oder beider elastischen Kunststoffelemente stattfinden kann.

Das Werkzeug selber wird über einen Gewindestift 14 und einen Haltering 5 in dem werkzeugseitigen Halterteil fixiert. Zur Kühlung des Werkzeuges umfasst die in Figur 1 gezeigte Ausführungsform ein Kühlsystem, welches sich vom Umfang des maschinenseitigen Halterteils über ein die Kupplungseinrichtung durchdringendes zentrales Kühlrohr 6, welches in einem Rollenkäfig 17 im Zentrum der Kupplungseinrichtung angeordnet ist, über eine Ausnehmung in dem werkzeugseitigen Halterteil bis zu der Werkzeugaufnahme selber erstreckt. Bei der gezeigten Ausführungsform sind die Mitnehmer in Gleithülsen 7 gelagert, die sich durch die Winkelscheibe 15, das elastische Kunststoffelement 16 sowie die Kupplungsscheibe 4 erstrecken.

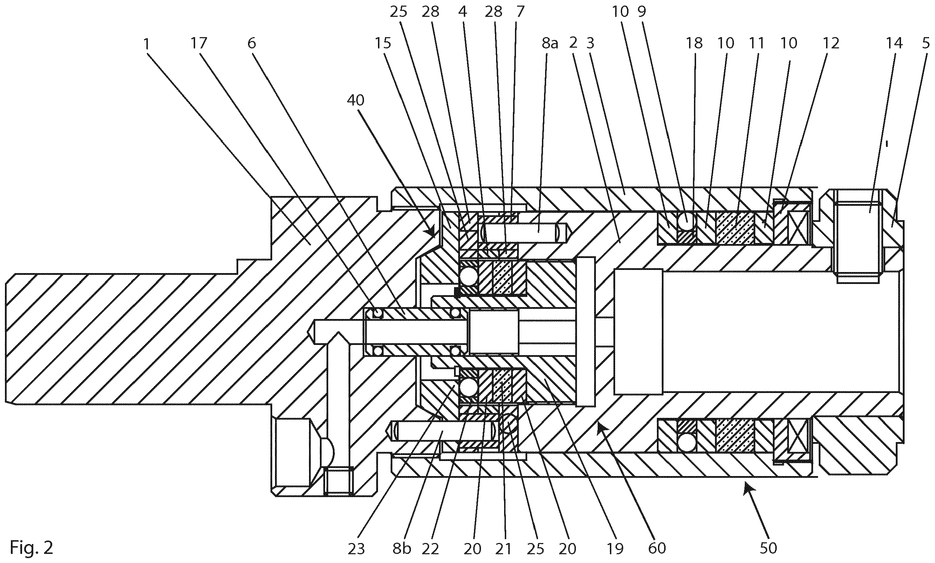

Figur 2 zeigt eine Schnittansicht einer zweiten Ausführungsform des erfindungsgemäßen Werkzeughalters. Bei dieser Ausführungsform umfasst die Kupplungseinrichtung 40 des Werkzeughalters ein Justiermodul 60, der übrige Aufbau des Werkzeughalters gemäß der zweiten Ausführungsform entspricht weitgehend dem Aufbau gemäß der ersten Ausführungsform, so dass nachfolgend im Wesentlichen auf das Justiermodul 60 eingegangen wird.

Das Justiermodul 60 ist zentral in der Kupplungseinrichtung 40 angeordnet, und die übrigen Bauteile der Kupplungseinrichtung umgeben das Justiermodul ringartig. Das Justiermodul 60 umfasst ein Justiermittel 19, das bei der gezeigten Ausführungsform ein Außengewinde umfasst und in einer entsprechenden Ausnehmung des werkzeugseitigen Halterteils axial verstellbar angeordnet ist.

Das Justiermittel 19 umfasst einen hohlen gewindefreien zentralen Abschnitt 19a, durch welchen sich ein Abschnitt des Kühlsystems erstreckt. Das Justiermittel 19 umfasst werkzeugseitig ferner ein Stellmittel 26, über welches das Justiermittel in dem werkzeugseitigen Halterteil axial verstellt werden kann. Bei der gezeigten Ausführungsform ist das Stellmittel 26 als Innensechskant ausgebildet.

Um den zentralen hohlen Abschnitt 19a sind ringartig das elastische Kunststoffelement 21 mit einer Shore-A-Härte von ca. 60 und ein innerer Wälzring 22 mit einer Mehrzahl von Wälzkörpern 27 angeordnet. Das Justiermodul 60 stützt sich über den inneren Wälzring 22 an einem zentralen Ringbereich der Winkelscheibe 15 ab. Bei der gezeigten Ausführungsform umfasst das Justiermodul ferner zwei Stützringe 20, die beidseitig des elastischen Kunststoffelementes 21 angeordnet sind und dieses gegen ein Einlaufen der als Kugeln ausgebildeten Wälzkörper und gegen eine Bewegung der Anlagefläche des Justiermittels schützen.

Das Justiermodul 60 ist von weiteren Bauteilen der Kupplungseinrichtung 40 umgeben, wobei diese ringartig um das Justiermodul 60 angeordnet sind. Bei der gezeigten Ausführungsform umfasst der äußere Abschnitt der Kupplungseinrichtung einen Kupplungsring 4, der sowohl zur Maschinenseite als auch zur Werkzeugseite von einem Wälzring 28 mit einer Mehrzahl von als Rollen ausgebildeten Wälzkörpern 25 umgeben ist. Die beiden Wälzringe 28 stützen die Kupplungseinrichtung maschinenseitig zu der Winkelscheibe 15 und werkzeugseitig zu dem werkzeugseitigen Halterteil 2 ab. Der Kupplungsring 4 sowie die beiden Wälzringe 17 umfassen Öffnungen, durch die sich die Mitnehmer 8a, 8b des werkzeugseitigen sowie des maschinenseitigen Halterteils erstrecken.

Zum Feststellen des Winkelausgleichs (für ein drehendes Werkzeug) wird das Justiermittel 19 axial in Richtung auf die Winkelscheibe verstellt. Da das maschinenseitige Halterteil über den Vorspannring 12 an der Hülse 3 (und damit an dem maschinenseitigen Halterteil 1) festgelegt ist, wird über ein axiale Verschiebung des Justiermodules hin zu der Winkelscheibe diese mit zunehmender Kraft in der konischen Ausnehmung des maschinenseitigen Halterteils fixiert, und ab einer gewissen Kraft ist ein Winkelausgleich aufgrund des Eigengewichtes des werkzeugseitigen Halterteiles und der bei der Bearbeitung des Werkstücks auftretenden Kräfte nicht mehr möglich. Die inneren und äußeren Wälzringe mit ihren Wälzkörpern sorgen jedoch dafür, dass auch bei festgestelltem Winkelausgleich ein Radialausgleich möglich ist, wobei eine Verschiebung der Wälzringe gegenüber der Winkelscheibe stattfindet.

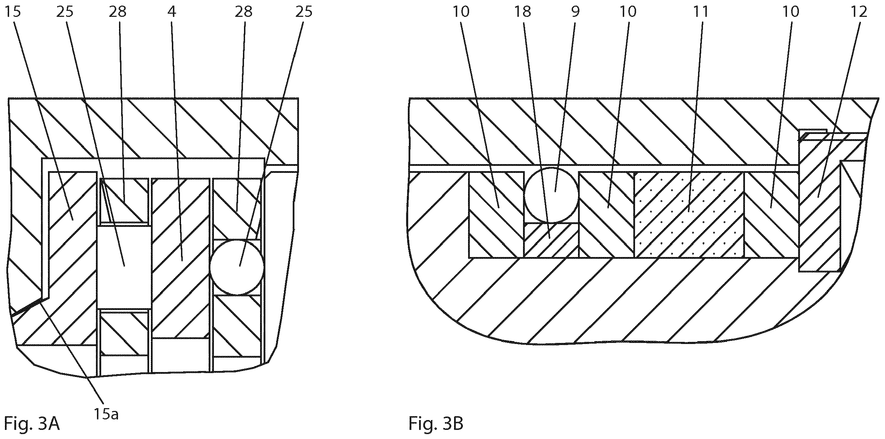

Figur 3A zeigt eine Detailaufnahme des äußeren Abschnitts der Kupplungseinrichtung 40 gemäß der in Figur 2 gezeigten zweiten Ausführungsform der erfindungsgemäßen Kupplungseinrichtung. Der äußere Kupplungsabschnitt stützt sich zur Maschinenseite hin über den Wälzring 17 bzw. darin angeordneten Wälzkörper an der Winkelscheibe 15 ab. Zur Werkzeugseite hin stützt sich die Kupplungseinrichtung 40 über einen Wälzring 17 mit entsprechenden Wälzkörpern 25 an dem werkzeugseitigen Halterteil ab. Zwischen den beiden Wälzringen 17 ist der Kupplungsring 4 angeordnet. Wie bei der Detailzeichnung zu sehen ist, ragen die Wälzkörper 25 über die Stirnflächen der Wälzringe 28 hinaus, so dass zwischen dem Kupplungsring 4 und den Wälzringen 28 keine Gleitfläche gebildet ist, sondern eine Verschiebung über die Wälzkörper stattfindet.

Figur 3A zeigt ferner, dass die Winkelscheibe 15 über einen balligen Abschnitt 15a in einer konischen Aufnahme des maschinenseitigen Halterteils 1 gelagert ist, wobei dieser ballige Abschnitt einen ersten Drehpunkt für den Winkelausgleich bereitstellt und gleichzeitig dafür verantwortlich ist, dass sich die Winkelscheibe bei Aufbringung einer Kraft mit ihrer Zentralachse an der Zentralachse des maschinenseitigen Halterteils ausrichtet und somit das Verkippen des werkzeugseitigen Halterteils aufgehoben wird.

Figur 3B zeigt eine Detailschnittaufnahme der Vorspanneinrichtung 50. Diese ist über einen Vorspannring 12 in der Hülse 3 angeordnet und verspannt das werkzeugseitige Halterteil gegenüber dem maschinenseitigen Halterteil. Die Vorspanneinrichtung 50 umfasst ein als Ring ausgebildetes elastisches Kunststoffelement 11 mit einer Shore-A-Härte von ca. 95. Ferner umfasst die Vorspanneinrichtung 40 einen Wälzring 18 mit einer Mehrzahl von Wälzkörpern 9, die bei der gezeigten Ausführungsform als Kugeln ausgebildet sind.

Bei der gezeigten Ausführungsform umfasst die Vorspanneinrichtung ferner drei Stützringe 10, die die anderen Bauteile der Vorspanneinrichtung voneinander und von den umgebenden Anlageflächen des werkzeugseitigen Halterteils und des Vorspannrings 12 separieren. Die beiden den Wälzring 18 umgebenden Stützringe verhindern ein Einlaufen der Kugel 9 in das elastische Kunststoffelement 11 und die Anlagefläche des werkzeugseitigen Halterteils 2, der rechts des elastischen Kunststoffelementes 11 vorgesehene Stützring vermeidet eine Beschädigung des elastischen Kunststoffelementes bei einer Verdrehung des Vorspannringes.

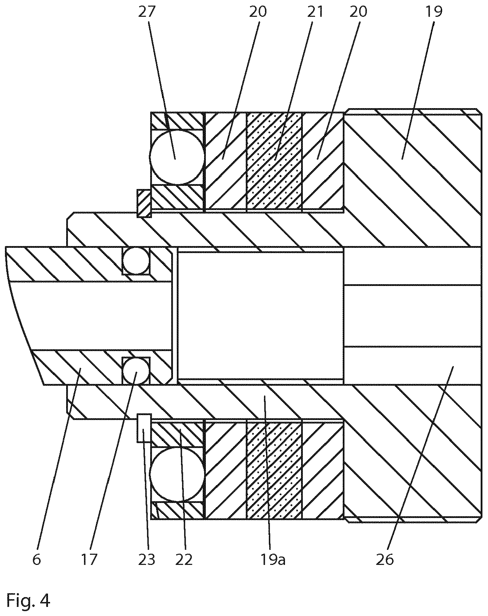

Figur 4 zeigt eine Detailschnittansicht des bei der zweiten Ausführungsform verwendeten Justiermoduls 60. Das Justiermodul umfasst ein Justiermittel 19 mit einem Außengewinde und einem zentralen hohlen Abschnitt 19a, durch welchen ein Teil des zuvor beschriebenen Kühlsystems verläuft. Das Justiermittel 19 ist im Zentralbereich 19a ferner mit einem über das werkzeugseitige Halterteil 2 zugängliche Stellmittel 26 versehen, über welches das Justiermittel in dem werkzeugseitigen Halterteil 2 axial verstellt werden kann. Die in Figur 4 gezeigte Ausführungsform des Justiermoduls 60 umfasst vier Ringelemente, die um den zentralen hohlen Bereich 19a angeordnet sind. Das ringförmig ausgebildete elastische Kunststoffelement 21 ist von zwei Stützringen 20 abgestützt, die es zum einen gegen ein Einlaufen der als Kugeln ausgebildeten Wälzkörper 27 des inneren Wälzringes schützen, und zum anderen gegen eine Beschädigung bei einer Verdrehung des Stellmittels 19. Die vorgenannten Ringbauteile werden durch einen Segerring 23 gegen ein Verrutschen (im nicht eingebauten Zustand) gesichert.

## Patentansprüche

1. Werkzeughalter für Werkzeugmaschinen mit einem maschinenseitigen Halterteil (1) und einem werkzeugseitigen Halterteil (2),
einer die Halterteile (1, 2) mit radialem Spiel drehfest miteinander verbindenden Kupplungseinrichtung (40), die sich maschinenseitig an einer Winkelscheibe (15) abstützt, welche über einen balligen Bereich (15a) winkelverstellbar an dem maschinenseitigen Halterteil (1) angeordnet ist, und die ein radial bewegbares Kupplungselement (4) mit zumindest zwei Ausnehmungen umfasst, wobei in eine Ausnehmung ein Mitnehmer (8a) des werkzeugseitigen Halterteils (2) und in eine andere Ausnehmung ein Mitnehmer (8b) des maschinenseitigen Halterteils (1) eingreift,
einer das werkzeugseitige Halterteil (2) gegen das maschinenseitige Halterteil (1) verspannende, das werkseitige Halterteil (2) teilweise umgebende Vorspanneinrichtung (50), wobei die Vorspanneinrichtung (50) einen Wälzring (18) mit einer Mehrzahl von Wälzkörpern (9) umfasst und wobei der Wälzring (18) eine radiale Bewegung des werkzeugseitigen Halterteils (2) zu der Vorspanneinrichtung ermöglicht,
**dadurch gekennzeichnet, dass** die Kupplungseinrichtung (40) und die Vorspanneinrichtung (50) jeweils ein elastisches Kunststoffelement (21, 16, 11) umfassen, wobei die Shore-A-Härte des elastischen Kunststoffelements (11) der Vorspanneinrichtung (50) größer als die Shore-A-Härte des elastischen Kunststoffelements (16) der Kupplungseinrichtung (40) ist.

2. Werkzeughalter nach Anspruch 1, **dadurch gekennzeichnet, dass** die Kupplungseinrichtung (40) ein zentrales, in dem werkzeugseitigen Halterteil (2) axial verstellbares Justiermodul (60) umfasst, wobei das Justiermodul (60) das elastische Kunststoffelement (21) umfasst und sich maschinenseitig über einen inneren Wälzring (22) mit einer Mehrzahl von Wälzkörpern (27) an der Winkelscheibe (15) abstützt, und dass die Kupplungseinrichtung (40) zumindest einen äußeren Wälzring (17) mit einer Mehrzahl von Wälzkörpern (7) aufweist, der sich maschinenseitig an der Winkelscheibe (15) abstützt.

3. Werkzeughalter nach Anspruch 2, **dadurch gekennzeichnet, dass** das Justiermodul (60) ein über das werkzeugseitige Halterteil (2) zugängliches Stellmittel (26) umfasst.

4. Werkzeughalter nach Anspruch 2 oder 3, **dadurch gekennzeichnet, dass** die Wälzkörper (7) in dem zumindest einen äußeren Wälzring (17) als Rollen ausgebildet sind.

5. Werkzeughalter nach einem der Ansprüche 1 - 4,
**dadurch gekennzeichnet, dass** die Wälzkörper (9) der Vorspanneinrichtung (50) als Kugeln ausgebildet sind.

6. Werkzeughalter nach einem der Ansprüche 1 - 5,
**dadurch gekennzeichnet, dass** die Shore-A-Härte des elastischen Kunststoffelements (21, 16) der Kupplungseinrichtung zwischen 50 und 70 und die Shore-A-Härte des elastischen Kunststoffelements (11) der Vorspanneinrichtung (50) zwischen 80 und 100 beträgt.

## Claims

1. A tool holder for machine tools with a holder part (1) on the machine side and a holder part (2) on the tool side,
a coupling device (40) which connects the holder parts (1, 2) to each other with radial clearance in a torque-resistant manner and is supported on the machine side on an angled spacer (15) which via a spherical area (15a) is arranged on the machine-side holder part (1) in an angle-adjustable manner, and which comprises a radially movable coupling element (4) with at least two recesses, wherein a catch (8a) of the tool-side holder part (2) engages in one recess and a catch (8b) of the machine-side holder part (1) engages in the other recess
a pre-tensioning device (50) which clamps the tool-side holder part (2) against the machine-side holder part (1) and partially surrounds the tool-side holder part (2), wherein the pre-tensioning device (50) comprises a roller ring (18) with a plurality of rolling elements (9) and wherein the roller ring (18) makes a radial movement of the tool-side holder part (2) towards the pre-tensioning device possible,
**characterised in that** the coupling device (40) and the pre-tensioning device (50) each comprise an elastic plastic element (12, 16, 11), wherein the Shore-A hardness of the plastic element (11) of the pre-tensioning device (50) is greater than the Shore-A hardness of the elastic plastic element (16) of the coupling device (40).

2. The tool holder according to claim 1, **characterised in that** the coupling device (40) comprises a central adjusting module (60) which is axially adjustable in the tool-side holder part (2), wherein the adjusting module (60) surrounds the elastic plastic element (21) and on the machine side is supported via an inner roller ring (22) with a plurality of rolling element (27) on the angled spacer (15) and **in that** the coupling device (40) comprises at least one outer roller ring (17) with a plurality of rolling elements (7) which on the machine side is supported on the angled spacer (15).

3. The tool holder according to claim 2, **characterised in that** the adjusting module (60) comprises an adjusting means (26) which is accessible via the tool-side holder part (2).

4. The tool holder according to claim 2 or 3, **characterised in that** the roller elements (7) are designed in the form of rollers in the at least one outer roller ring (17).

5. The tool holder according to any one of claims 1 - 4, **characterised in that** the roller elements (9) of the pre-tensioning device (50) are designed as spheres.

6. The tool holder according to any one of claims 1 - 5, **characterised in that** the Shore-A hardness of the elastic plastic element (21, 16) of the coupling device is between 50 and 70, and the Shore-A hardness of the elastic plastic element (11) of the pre-tensioning device (50) is between 80 and 100.

## Revendications

1. Porte-outil pour machines-outils avec
une pièce de support côté machine (1) et une pièce de support côté outil (2),
un dispositif d'accouplement (40) reliant entre elles les pièces de support (1, 2) s0lidairement en rotation avec un jeu radial, qui s'appuie côté machine sur une rondelle d'angle (15), laquelle est disposée sur la pièce de support côté machine (1), pouvant être angulairement réglée sur une zone bombée (15a) et qui comprend un élément d'accouplement (4) radialement mobile avec au moins deux évidements, un élément d'entraînement (8a) de la pièce de support côté outil (2) venant en prise dans une évidement et un élément d'entraînement (8b) de la pièce de support côté machine (1) venant en prise dans un autre évidement,
un dispositif de précontrainte (50) serrant la pièce de support côté outil (2) contre la pièce de support côté machine (1), entourant en partie la pièce de support côté outil (2), le dispositif de précontrainte (50) comprenant une bague à rouleaux (18) avec une pluralité de corps à rouleaux (9) et la bague à rouleaux (18) permettant un mouvement radial de la pièce de support côté outil (2) vers le dispositif de précontrainte,
**caractérisé en ce que** le dispositif d'accouplement (40) et le dispositif de précontrainte (50) comprenant respectivement un élément en plastique élastique (21, 16, 11), la dureté Shore A de l'élément en plastique élastique (11) du dispositif de précontrainte (50) étant supérieure à la dureté Shore A de l'élément en plastique élastique (16) du dispositif d'accouplement (40).

2. Porte-outil selon la revendication 1, **caractérisé en ce que** le dispositif d'accouplement (40) comprend un module d'ajustage (60) central, axialement réglable dans la pièce de support côté outil (2), le module d'ajustage (60) comprenant l'élément en plastique élastique (21) et s'appuyant côté machine sur la rondelle d'angle (15) par le biais d'une bague à rouleaux intérieure (22) avec une pluralité de corps à rouleaux (27) et **en ce que** le dispositif d'accouplement (40) comporte au moins une bague à rouleaux extérieure (17) avec une pluralité de corps à rouleaux (7), qui s'appuie côté machine sur la rondelle d'angle (15).

3. Porte-outil selon la revendication 2, **caractérisé en ce que** le module d'ajustage (60) comprend un moyen de réglage (26) accessible sur la pièce de support côté outil (2).

4. Porte-outil selon la revendication 2 ou 3, **caractérisé en ce que** les corps à rouleaux (7) sont constitués dans au moins une bague à rouleaux extérieure (17) sous la forme de rouleaux.

5. Porte-outil selon l'une quelconque des revendications 1 - 4, **caractérisé en ce que** les corps à rouleaux (9) du dispositif de précontrainte (50) sont constitués sous la forme de billes.

6. Porte-outil selon l'une quelconque des revendications 1 - 5, **caractérisé en ce que** la dureté Shore A de l'élément en plastique élastique (21, 16) du dispositif d'accouplement se situe entre 50 et 70 et la dureté Shore A de l'élément en plastique élastique (11) du dispositif de précontrainte (50) entre 80 et 100.
